# EUROPÄISCHE PATENTSCHRIFT

(11) **EP 2 181 016 B1**
(45) Veröffentlichungstag und Bekanntmachung des Hinweises auf die Patenterteilung: **18.05.2016**
(21) Anmeldenummer: 08773547.8
(22) Anmeldetag: 20.06.2008
(51) Int. Cl.: B60N 2/427, B60N 2/68, B22F 7/00, B29C 44/12

(54) **STRUKTUR FÜR EINEN FAHRZEUGSITZ**
STRUCTURE FOR A VEHICLE SEAT
STRUCTURE POUR SIÈGE DE VÉHICULE

(30) Priorität: 18.07.2007 DE 102007033776; 18.07.2007 DE 102007033780; 18.07.2007 DE 102007033777; 18.07.2007 DE 102007033783; 18.07.2007 DE 102007033778; 18.07.2007 DE 102007033782; 09.11.2007 DE 102007053964
(43) Veröffentlichungstag der Anmeldung: 05.05.2010
(73) Patentinhaber: Johnson Controls GmbH, 51399 Burscheid (DE)
(72) Erfinder: FUNK, Stefan, 42799 Leichlingen (DE); ZYNDA, Martin, 51399 Burscheid (DE); JOSTEN, Stefan, 41569 Rommerskirchen (DE); ENGELS, Bernd, 42897 Remscheid (DE); HANSEN, Andreas, 71111 Waldenbuch (DE)
(74) Vertreter: Kutzenberger, Helga
(86) Internationale Anmeldenummer: PCT/EP2008/004994
(87) Internationale Veröffentlichungsnummer: WO 2009/010149

(56) Entgegenhaltungen:
- EP-A- 0 893 332
- WO-A-01/89875
- WO-A-99/19164
- WO-A-2005/002950
- WO-A1-2005/007466
- DE-A1- 4 208 150
- DE-A1- 10 240 042
- DE-A1- 10 321 289
- GB-A- 2 298 123
- JP-A- 1 069 309

## Beschreibung

Die Erfindung betrifft eine Struktur für einen Fahrzeugsitz, welche Hohlräume bildende steife Strukturkomponenten und einer die Hohlräume zumindest partiell füllenden Schaumstruktur umfasst.

Solche Fahrzeugsitze sind allgemein bekannt. Beispielsweise ist aus der deutschen Offenlegungsschrift DE 102 14 476 A1 sowie aus der deutschen Offenlegungsschrift DE 103 21 289 A1 ein Rahmen aus Hohlprofilen bzw. eine Rückenlehne eines Fahrzeugsitzes bekannt, wobei jeweils ein Schaum in Hohlräumen von Strukturelementen angeordnet ist. Ferner ist aus der deutschen Offenlegungsschrift DE 10 2004 043 860 A1 sowie aus der deutschen Offenlegungsschrift DE 197 46 164 A1 eine Rückenlehne für einen Sitz bzw. ein Materialverbund mit einem zumindest abschnittsweise hohlen Profil bekannt, wobei ein Schaum in Hohlräumen von Strukturelementen angeordnet ist. Ferner ist aus der deutschen Offenlegungsschrift DE 42 08 150 A1 sowie aus der deutschen Offenlegungsschrift DE 197 27 907 A1 eine Rückenlehne für einen Fahrzeugsitz bzw. ein Verfahren zum Füllen von Hohlräumen in Werkstücken oder Halbzeugen bekannt. Ferner ist aus der deutschen Patentschrift DE 40 28 895 C1 sowie aus der europäischen Patentanmeldung EP 1 591 224 A1 ein Schaumformkörper zum Abschotten von Karosseriehohlräumen bzw. eine Vorrichtung und ein Verfahren zur Schalldämpfung in Hohlräumen von Fahrzeugen bekannt. Ferner ist aus der Patentschrift DE 10 2006 014 538 B3 bekannt, ein Kabel im Inneren eines Rohrs an einem Kraftfahrzeugsitz anzuordnen und es ist aus der Druckschrift DE 198 17279 A1 ein elastischer Körper für eine Leitungsdurchführung bekannt. Weiterhin ist aus der Druckschrift DE 36 36 113 A1 ein Verfahren zur Bildung einer geschäumten Masse in einem Hohlraum, aus der Druckschrift DE-P-23 03 289 ein Fahrzeugsitz mit einer ein Lehnenpolster tragenden Schale und aus der Druckschrift DE 37 14 588 A1 ein Sicherheits-Lehnenholm aus Kunststoff bekannt.

Die DE 102 40 042 A1 offenbart einen Fahrzeugsitz mit einer Rückenlehne und einem Sitzteil, wobei die Rückenlehne eine Basisplatte und darauf aufgesetzte, ein U-förmiges Profil bildende Pressteile aufweist.

Aus der EP 0 893 332 A1 ist ein Verfahren zur lokalen Verstärkung von Bereichen eines Rahmens eines Fahrzeugsitzes bekannt, die nur schwer zugänglich sind. Hierbei wird ein flexibler Träger mit einem expandierbaren Harz versehen und in den Rahmen eingebracht. Daraufhin wird der das expandierbare Harz expandiert so dass sich dieses mit dem Rahmen verbindet.

Bei den bekannten Fahrzeugsitzen ist es nachteilig, dass teilweise der Hohlraum immer vollständig gefüllt wird oder aber lediglich eine teilweise Befüllung des Hohlraums lediglich auf eine Verbesserung der akustischen Eigenschaften abzielt.

Die Aufgabe der vorliegenden Erfindung ist daher die gezielte Ausbildung bzw. Einbringung einer Füllung in einen Hohlraum eines Strukturelements eines Fahrzeugsitzes zur Verbesserung der mechanischen Eigenschaften des Fahrzeugsitzes.

Die Aufgabe wird gelöst durch einen Fahrzeugsitz mit den Merkmalen des Patentanspruchs 1. Vorteilhafte Ausgestaltungen sind den abhängigen Ansprüchen zu entnehmen.

Hierdurch kann in einfacher Weise eine Verbesserung der mechanischen Eigenschaften des Fahrzeugsitzes dadurch erreicht werden, dass die Füllung derart angeordnet und ausgebildet ist, dass bei der Ausbildung des Schaums aus dem Schaummaterial (d.h. bei der Expansion des Schaummaterials) zum einen eine gute Anbindung, insbesondere Klebeverbindung, an den Innenflächen bzw. der Innenwand des Strukturelements erzielt wird und dass zum anderen eine gute Einbringbarkeit der Füllung in den Hohlraum gewährleistet ist, die zu einer leichten Montierbarkeit des erfindungsgemäßen Fahrzeugsitzes führt.

Besonders bevorzugt ist es erfindungsgemäß, wenn das Schaummaterial zur Expansion in einem Elektro-Tauchlackierungsofen vorgesehen ist. Hierdurch kann mittels eines Arbeitsgangs, der ohnehin durchgeführt wird, eine schnelle und montagetechnisch einfache Integration der Schaumverstärkung des Fahrzeugsitzes erfolgen.

Besonders bevorzugt ist es, wenn
- das Strukturelement mittels des Schaummaterials im Bereich um eine Durchladeöffnung der Rückenlehne verstärkt ist.
Hierdurch ist es erfindungsgemäß möglich, eine gezielte Verstärkung an hochbeanspruchten Stellen des Fahrzeugsitzes bzw. der Rückenlehne zu erhalten. Erfindungsgemäß ist es auch bevorzugt, wenn eine Kombination einer Schaumverstärkung an mehr als einer der genannten Stellen erfolgt. Es ist hierdurch erfindungsgemäß vorteilhaft möglich, dass das Gewicht und die Kosten eines solchen Fahrzeugsitzes dadurch reduziert werden können, dass beispielsweise die Wandstärke eines zu verwendenden Metallmaterials, beispielsweise Stahlblech, nicht zwingend dahingehend ausgelegt oder gewählt werden muss, dass mechanisch hoch belastete Teile bzw. Bereiche des Fahrzeugsitzes den vorgesehenen Belastungen standhalten, sondern dass umgekehrt die Wandstärke eines zu verwendenden Materials reduziert werden kann und eine Verstärkung in Form der Füllung mit unter anderem dem Schaummaterial an solchen mechanisch hoch belasteten Teilen bzw. Bereichen des Fahrzeugsitzes erfolgt.

### Figurenbeschreibung

Die Figuren stellen beispielhaft und schematisch Ausführungen der Erfindung dar.
**Figuren 1 und 2** zeigen eine erste Ausführungsform eines erfindungsgemäßen Fahrzeugsitzes bzw. eines seiner Teile.
**Figur 3** zeigt eine nicht erfindungsgemäße Ausführungsform eines Fahrzeugsitzes bzw. eines seiner Teile.
**Figuren 4 und 5** zeigen eine weitere nicht erfindungsgemäße Ausführungsform eines Fahrzeugsitzes bzw. eines seiner Teile.
**Figuren 6 und 7** zeigen noch eine weitere nicht erfindungsgemäße Ausführungsform eines Fahrzeugsitzes bzw. eines seiner Teile.
**Figuren 8 und 9** zeigen eine zweite Ausführungsform eines erfindungsgemäßen Fahrzeugsitzes bzw. eines seiner Teile.
**Figuren 10 und 11** zeigen eine weitere Ausführungsform eines erfindungsgemäßen Fahrzeugsitzes bzw. eines seiner Teile.
**Figuren 12 und 13** zeigen schematische Darstellungen eines erfindungsgemäßen Fahrzeugsitzes gemäß sämtlicher der Ausführungsformen.

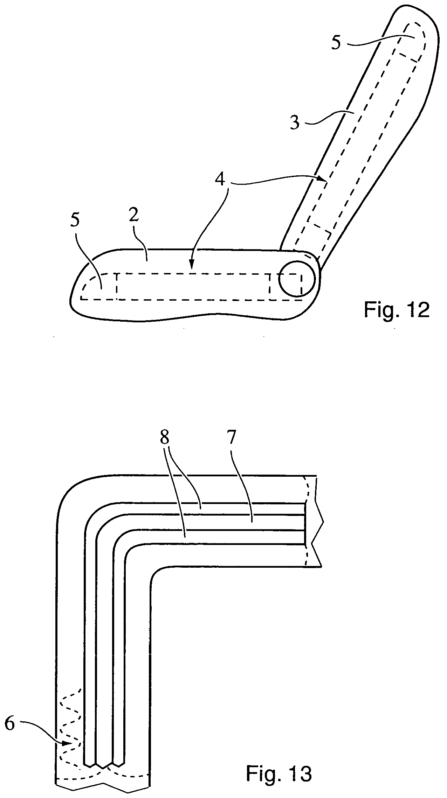

In den Figuren 12 und 13 ist ein erfindungsgemäßer Fahrzeugsitz mit Merkmalen dargestellt, die alle Ausführungsformen der vorliegenden Erfindung aufweisen. Ein solcher Fahrzeugsitz umfasst ein Sitzteil 2 und eine Rückenlehne 3. Sowohl das Sitzteil 2 als auch die Rückenlehne 3 weisen jeweils wenigstens ein Strukturelement 4 auf, das im Folgenden auch als Lehnensegment, Lehnenstruktur, Längsholm, Querholm, Rohrstruktur, Seitenholm, Pressteil oder Strukturkomponente bezeichnet wird. In diesem Strukturelement 4 ist zumindest in Teilbereichen ein Hohlraum 5 vorgesehen, der im Folgenden auch als Hohlkammer bezeichnet wird. Der Hohlraum 5 ist beispielsweise rahmenartig im wesentlichen der äußeren Form bzw. dem Umfang der Rückenlehne 3 oder des Sitzteils 2 folgend ausgebildet und im Querschnitt beispielsweise im wesentlichen rund oder oval oder abgerundet (beispielsweise im Fall von Rohrstrukturen oder rohrartigen Strukturen) oder aber im wesentlichen eckig, rechteckig, dreieckig oder abgewinkelt (beispielsweise im Fall eines mit einer Basisplatte verbundenen U-förmigen Profils) ausgebildet. In dem Hohlraum 5 ist gemäß der vorliegenden Erfindung in zumindest einem Teilbereich des Hohlraums 5 und bevorzugt auch lediglich in einem Teilbereich des Hohlraums 5 eine Füllung 6 angeordnet, wobei die Füllung 6 ein Schaummaterial 8 umfasst. Die Füllung 6 bzw. das Schaummaterial 8 wird im Folgenden auch als Schaumstruktur bezeichnet. Gemäß der vorliegenden Erfindung ist vorgesehen, dass die Füllung 6 in Form eines mit einem Schaumträger 7 verbundenen noch unexpandierten und im wesentlichen harten jedenfalls im Wesentlichen nicht klebenden Schaummaterials 8 in den Hohlraum 5 eingebracht wird oder aber an einem eine Hohlraumwand bildenden Strukturteil befestigt oder positioniert wird, wobei der Hohlraum 5 dann durch Verbinden mit einem anderen Strukturteil gebildet wird. In einem nachfolgenden Schritt wird dann das Schaummaterial 8 expandiert, wodurch das Schaummaterial 8 den Schaumträger 7 zumindest teilweise umgibt bzw. bevorzugt vollständig umgibt. In Figur 13 ist zu Veranschaulichung dessen ein Ausschnitt aus einem in dem Strukturelement 4 ausgebildeten Hohlraum 5 dargestellt, wobei in dem Hohlraum 5 in durchgezogenen Linien die Füllung 6, d.h. den Schaumträger 7 und das Schaummaterial 8, in unexpandiertem Zustand des Schaummaterials 8 dargestellt ist und wobei gestrichelte Linien bzw. Punktierungen die Begrenzung des Schaummaterials 8 in aufgeschäumtem Zustand darstellen. Die Expansion des Schaummaterials 8 kann erfindungsgemäß insbesondere mittels einer KTL-Bad-Behandlung (nicht dargestellt) erfolgen. Hierunter wird eine Behandlung in einem Elektro-Tauchlackierungsofen bzw. eine Kathodische Tauchlackierung verstanden, bei der die Strukturelemente 4 des Fahrzeugsitzes auf eine Temperatur von beispielsweise etwa 160° bis etwa 180° während beispielsweise etwa 5 Minuten bis etwa 15 Minuten, bevorzugt ca. 10 Minuten, gebracht werden.

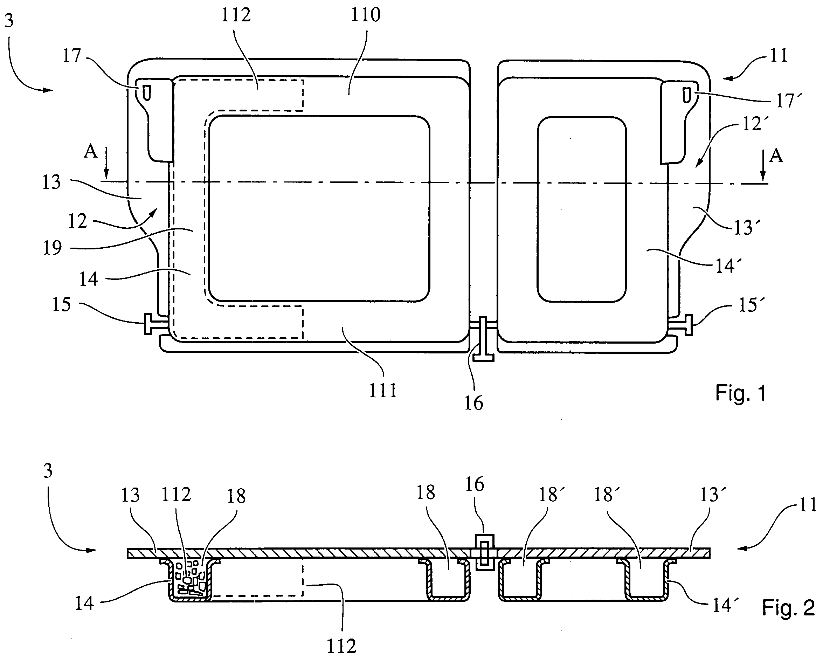

Figur 1 zeigt die rückwärtige Ansicht einer geteilten Lehnenstruktur einer ersten Ausführungsform eines erfindungsgemäßen Fahrzeugsitzes und Figur 2 zeigt einen Schnitt A-A durch die Lehnenstruktur nach Figur 1. Die Lehnenstruktur 11 der geteilten Rückenlehne einer Fahrzeug-Rücksitzbank besteht aus einem ersten Lehnensegment 12 und einem zweiten Lehnensegment 12', die beispielsweise im Verhältnis 60:40 aufgeteilt sind. Jedes Lehnensegment umfasst eine Basisplatte 13, 13' und ein darauf aufgesetztes, ein umlaufendes U-Profil bildendes Pressteil 14, 14'. Die Basisplatten 13, 13' und die Pressteile 14, 14' bestehen beispielsweise aus Metall, insbesondere Stahl- oder Aluminiumblech, oder aus Kunststoff, beispielsweise aus glasfaserverstärktem Kunststoff. Dabei können auch verschiedene Werkstoffe miteinander gepaart werden. Über Seitenlager 15, 15' und ein Mittellager 16 sind die Lehnensegmente 12, 12' unabhängig voneinander drehbar im Fahrzeug gelagert. Seitlich am oberen Seitenbereich der Lehnenstruktur 11 angeordnete Drehfallenschlösser 17, 17' dienen der Verriegelung der Lehnensegmente 12, 12' in aufrechter Gebrauchsstellung an der Fahrzeugkarosserie, insbesondere an der C-Säule. Die Basisplatten 13, 13' und Pressteile 14, 14' bilden miteinander jeweils rahmenartig umlaufende Hohlkammem 18, 18' aus. Erfindungsgemäß ist vorgesehen, dass der außenliegende Seitenholm 19 und die sich daran anschließenden Bereiche des oberen Querholms 110 und des unteren Querholms 111 zumindest des größeren Lehnensegments 12 mit einer aussteifenden Schaumstruktur 112 gefüllt sind. In rückwärtiger Ansicht ist der betreffende gefüllten Bereich der Hohlkammer 18 etwa C-förmig ausgebildet (Figur 1). Erfindungsgemäß ist das Einsetzen eines eine Raumform aufweisenden, insbesondere strangartigen Schaumvorprodukts in die Hohlkammer 18, welches vor, während oder nach dem Verschweißen in die Hohlkammer 18 eingelegt wird und nach einer Aktivierung zu der Schaumstruktur 112 aufschäumt. Die Aktivierung kann beispielsweise durch Wärmezufuhr beim Lackieren der Lehnenstruktur 11 erfolgen. Hierzu werden vorzugsweise steif vernetzende Schaumsysteme, z. B. auf Epoxidbasis, verwendet. Die Lehnenstruktur 11 wird hierdurch im unfallbedingt hochbelasteten Bereich so versteift, dass auf weitere Verriegelungseinrichtungen - wie beispielsweise ein sogenannter shotbolt bzw. eine Drehmomentensperre - verzichtet werden kann.

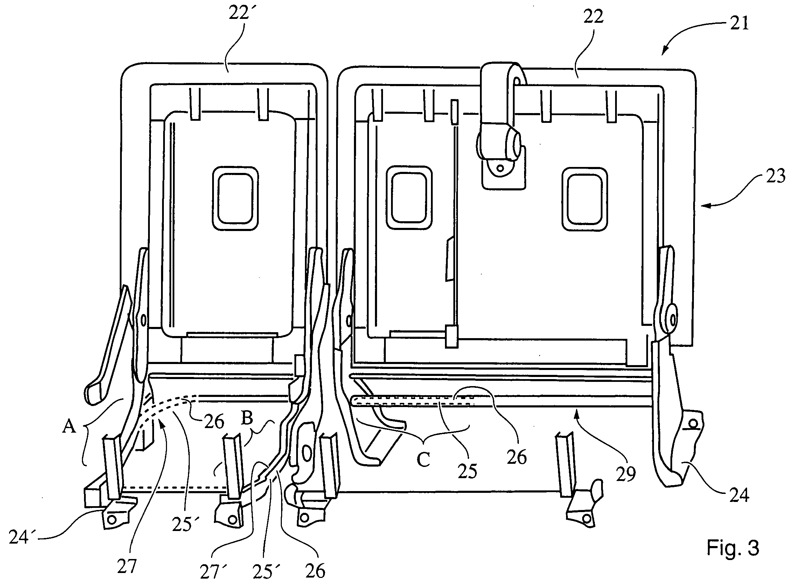

Figur 3 zeigt eine Ausführungsform eines nicht erfindungsgemäßen Fahrzeugsitzes. Die Struktur der Rücksitzbank 21 umfasst getrennt (beispielsweise im Verhältnis 60:40 getrennte) schwenkbare Lehnensegmente 22, 22' der Rückenlehne 3 sowie am Fahrzeugboden befestigte Konsolen 24, 24' mit rohrförmigen Strukturkomponenten 25, 25'. Die Lehnensegmente 22, 22' sind an der jeweils zugeordneten Konsole 24, 24' drehbar gelagert, In die mechanisch besonders hoch belasteten Bereiche A, B und C der rohrförmigen Strukturkomponenten 25, 25' ist eine versteifende Schaumstruktur 26 eingelassen, also insbesondere in die in Fahrtrichtung verlaufenden Längsholme 27, 27' der Konsole 24' des kleineren Lehnensegments 22' (Bereiche A, B) und in den dem Mittellager 28 zugewandten Teil des Querholms 29 der dem größeren Lehnensegment 22 zugeordneten Konsole 24. Das Einbringen der Schaumstruktur 26 kann beispielsweise durch Injizieren einer schäumfähigen Masse in die rohrförmigen Strukturkomponenten 25, 25' erfolgen. Besonders bevorzugt ist jedoch das Einsetzen eines eine Raumform aufweisenden, insbesondere strangartigen Schaumvorprodukts in das Innere der rohrförmigen Strukturkomponenten 25, 25', welches nach einer Aktivierung zu der Schaumstruktur 26 aufschäumt. Die Aktivierung kann beispielsweise durch Wärmezufuhr beim Lackieren der Konsolen 24, 24' erfolgen. Hierzu werden vorzugsweise steif vernetzende Schaumsysteme, z. B. auf Epoxidbasis, verwendet. Bei ddieser Ausführungsform sind die (zumindest teilweise) mit Schaum gefüllten Strukturteile rohrförmig ausgebildet.

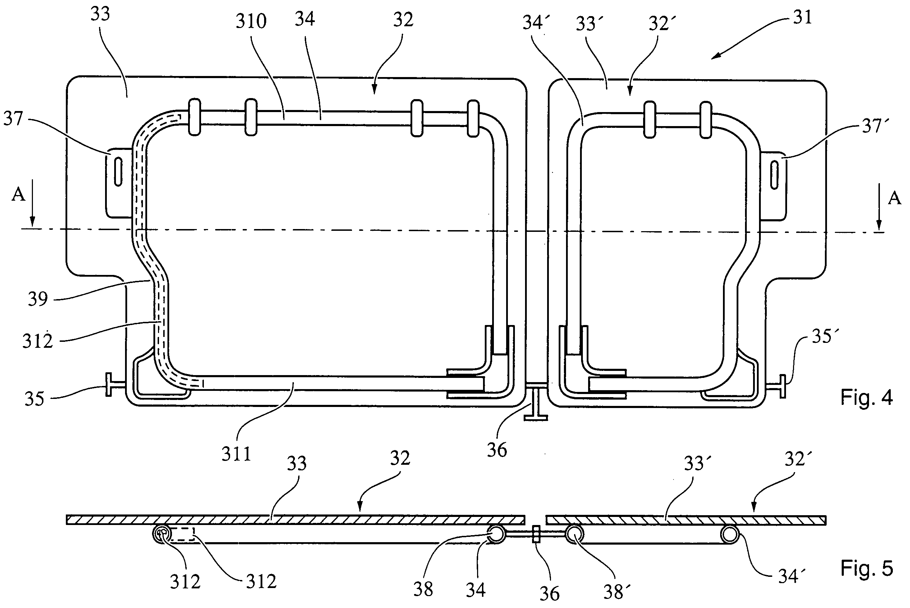

Figur 4 zeigt die rückwärtige Ansicht einer geteilten Lehnenstruktur gemäß einer weiteren nicht erfindungsgemäßen Ausführungsform des Fahrzeugsitzes und Figur 5 einen Schnitt A-A durch die Lehnenstruktur nach Figur 4. Die Lehnenstruktur 31 der geteilten Rückenlehne einer Fahrzeug-Rücksitzbank besteht aus einem ersten Lehnensegment 32 und einem zweiten Lehnensegment 32', die beispielsweise im Verhältnis 60:40 aufgeteilt sind. Jedes Lehnensegment 32, 32' umfasst eine Basisplatte 33, 33' und eine darauf aufgesetzte, im Wesentlichen rahmenförmig umlaufende Rohrstruktur 34, 34'. Die Basisplatten 33, 33' und die Rohrstrukturen 34, 34' bestehen beispielsweise aus Metall, insbesondere aus Stahl oder Aluminium. Dabei können auch verschiedene Werkstoff miteinander gepaart werden. Über Seitenlager 35, 35' und ein Mittellager 36 sind die Lehnensegmente 32, 32' unabhängig voneinander drehbar im Fahrzeug gelagert. Seitlich am oberen Seitenbereich der Lehnenstruktur 31 angeordnete Drehfallenschlösser 37, 37' dienen der Verriegelung der Lehnensegmente 32, 32' in aufrechter Gebrauchsstellung an der Fahrzeugkarosserie, insbesondere an der C-Säule. Die Rohrstrukturen 34, 34' bilden jeweils rahmenartige, im Wesentlichen umlaufende Hohlkammern 38, 38' aus. Es ist vorgesehen, dass der außenliegende Seitenholm 39 und gegebenenfalls auch die sich daran anschließenden Bereiche des oberen Querholms 310 und des unteren Querholms 311 zumindest des größeren Lehnensegments 32 mit einer aussteifenden Schaumstruktur 312 gefüllt sind. In rückwärtiger Ansicht ist der betreffende gefüllte Bereich der Hohlkammer 38 ansatzweise C-förmig ausgebildet (Fig. 4). Die Schaumstruktur 312 kann beispielsweise durch Injizieren einer schäumfähigen Masse in die Hohlkammer 38 eingebracht werden. Besonders bevorzugt ist jedoch das Einsetzen eines eine Raumform aufweisenden, insbesondere strangartigen Schaumvorprodukts in die Hohlkammer 38, welches nach einer Aktivierung zu der Schaumstruktur 312 aufschäumt. Die Aktivierung kann beispielsweise durch Wärmezufuhr beim Lackieren der Lehnenstruktur 31 erfolgen. Hierzu werden vorzugsweise steif vernetzende Schaumsysteme, z. B. auf Epoxidbasis, verwendet. Die Lehnenstruktur 31 wird hierdurch in unfallbedingt hochbelasteten Bereich so versteift, dass auf weitere Verriegelungseinrichtungen verzichtet werden kann.

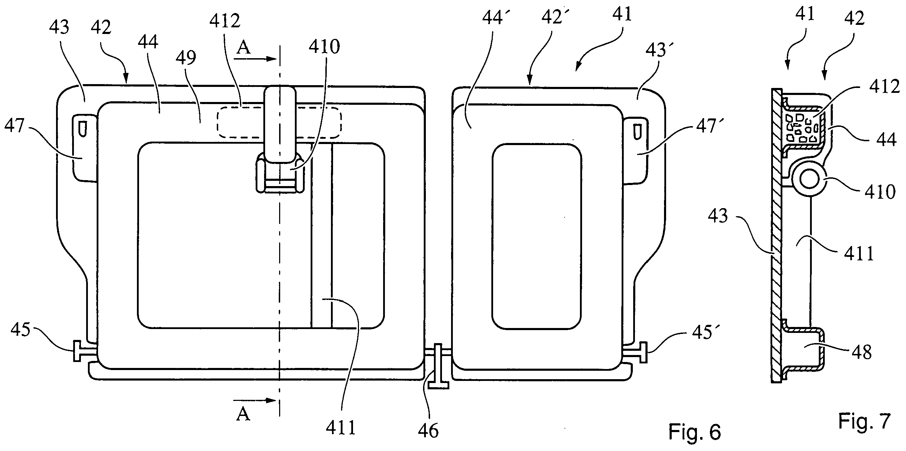

Figur 6 zeigt die rückwärtige Ansicht einer geteilten Lehnenstruktur einer weiteren nicht erfindungsgemäßen Ausführungsform des Fahrzeugsitzes und Figur 7 zeigt einen Schnitt A-A durch die Lehnenstruktur nach Figur 6. Die Lehnenstruktur 41 der geteilten Rückenlehne einer Fahrzeug-Rücksitzbank besteht aus einem ersten Lehnensegment 42 und einem zweiten Lehnensegment 42', die beispielsweise im Verhältnis 60:40 aufgeteilt sind. Jedes Lehnensegment 42, 42' umfasst eine Basisplatte 43, 43' und ein darauf aufgesetztes, ein umlaufendes U-Profil bildendes Pressteil 44, 44'. Die Basisplatten 43, 43' und die Pressteile 44, 44' bestehen beispielsweise aus Metall, insbesondere Stahl- oder Aluminiumblech, oder aus Kunststoff, beispielsweise aus glasfaserverstärktem Kunststoff. Dabei können auch verschiedene Werkstoff miteinander gepaart werden. Über Seitenlager 45, 45' und ein Mittellager 46 sind die Lehnensegmente 42, 42' unabhängig voneinander drehbar im Fahrzeug gelagert. Seitlich am oberen Seitenbereich der Lehnenstruktur 1 angeordnete Drehfallenschlösser 47, 47' dienen der Verriegelung der Lehnensegmente 42, 42' in aufrechter Gebrauchsstellung an der Fahrzeugkarosserie, insbesondere an der C-Säule. Die Basisplatten 43, 43' und Pressteile 44, 44' bilden miteinander jeweils rahmenartig umlaufende Hohlkammern 48 aus. In der Mitte des oberen Querholms 9 ist eine Gurtrollvorrichtung 410 eines Integralgurtes vorgesehen. Gegenüber diesem zum Mittellager 46 hin versetzt verläuft zur weiteren Versteifung ferner ein in das Pressteil 44 hingesetzter Vertikalholm 411. Es ist vorgesehen, dass der obere Querholm 49 im Bereich der Gurtrollvorrichtung 410 mit einer aussteifenden Schaumstruktur 412 gefüllt ist. Das Einbringen der Schaumstruktur 412 kann durch Einlegen eines der Hohlkammer 8 entsprechend geformten Schaumfertigteils vor oder während des Verschweißens von Basisplatte 43 und Pressteil 44 erfolgen. Alternativ wird die Schaumstruktur 412 erst im Anschluss an das Verschweißen durch Injizieren einer schäumfähigen Masse in die Hohlkammer 48 eingebracht. Besonders bevorzugt ist jedoch das Einsetzen eines eine Raumform aufweisenden, insbesondere strangartigen Schaumvorprodukts in die Hohlkammer 48, welches vor, während oder nach dem Verschweißen in die Hohlkammer 48 eingelegt wird und nach einer Aktivierung zu der Schaumstruktur 412 aufschäumt. Die Aktivierung kann beispielsweise durch Wärmezufuhr beim Lackieren der Lehnenstruktur 41 erfolgen, Hierzu werden vorzugsweise steif vernetzende Schaumsysteme, z. B. auf Epoxidbasis, verwendet. Die Lehnenstruktur 41 wird hierdurch in unfallbedingt hochbelasteten Bereich einerseits versteift, andererseits verbessern sich ihre Eigenschaften beim Kopfaufprall. Insbesondere wird die Verzögerung der Testkugel beim Kopfaufschlagtest verbessert.

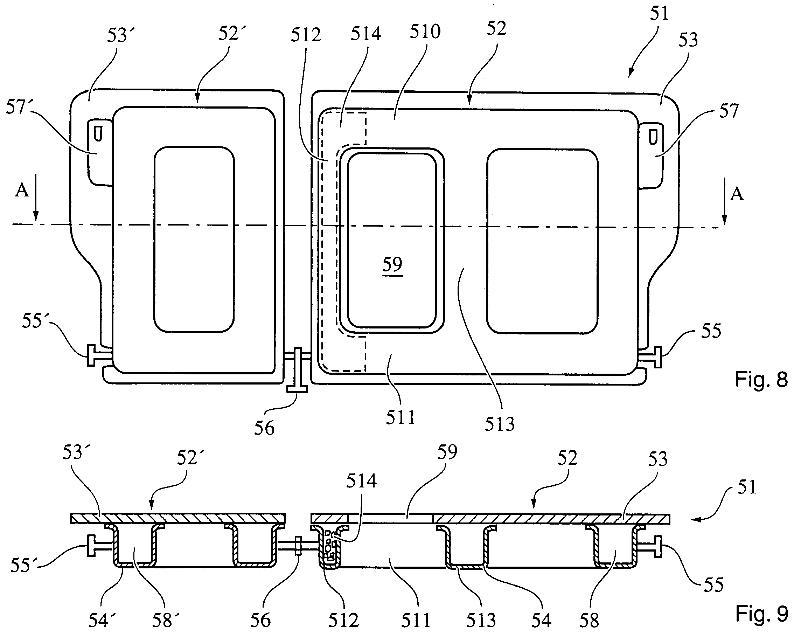

Figur 8 zeigt die rückwärtige Ansicht einer geteilten Lehnenstruktur einer zweiten Ausführungsform des erfindungsgemäßen Fahrzeugsitzes und Figur 9 einen Schnitt A-A durch die Lehnenstruktur nach Figur 8. Die Lehnenstruktur 51 der geteilten Rückenlehne einer Fahrzeug-Rücksitzbank besteht aus einem ersten Lehnensegment 52 und einem zweiten Lehnensegment 52', die im Verhältnis 60:40 aufgeteilt sind. Jedes Lehnensegment 52, 52' umfasst eine Basisplatte 53, 53' und ein darauf aufgesetztes, ein umlaufendes U-Profi bildendes Pressteil 54, 54'. Die Basisplatten 53, 53' und die Pressteile 54, 54' bestehen beispielsweise aus Metall, insbesondere Stahl- oder Aluminiumblech, oder aus Kunststoff, beispielsweise aus glasfaserverstärktem Kunststoff. Dabei können auch verschiedene Werkstoff miteinander gepaart werden. Über Seitenlager 55, 55' und ein Mittellager 56 sind die Lehnensegmente 52, 52' unabhängig voneinander drehbar im Fahrzeug gelagert. Seitlich am oberen Seitenbereich der Lehnenstruktur 51 angeordnete Drehfallenschlösser 57, 57' dienen der Verriegelung der Lehnensegmente 52, 52' in aufrechter Gebrauchsstellung an der Fahrzeugkarosserie, insbesondere an der C-Säule. Die Basisplatten 53, 53' und Pressteile 54, 54' bilden miteinander jeweils rahmenartig umlaufende Hohlkammern 58, 58' aus. Im größeren Lehnensegment 52 ist ferner eine Durchladeöffnung 59 vorgesehen, weiche von dem oberen Querholm 510, dem unteren Querholm 511, dem mittellagerseitigen Vertikalholm 512 und einem zentralen Vertikalholm 513 des Pressteils 54 umgeben ist. Der mittellagerseitige Vertikalholm 512 ist dabei besonders schlank ausgeführt, um die Durchladeöffnung 59 möglichst mittig in der Rücksitzbank anordnen zu können und möglichst groß gestalten zu können - etwa damit sie größer ist als die Quererstreckung eines Snowboard-Brettes. Erfindungsgemäß ist vorgesehen, dass zumindest der mittellagerseitige Vertikalholm 512, und auch die sich daran anschließenden Bereiche des oberen Querholms 510 und des unteren Querholms 511, mit einer aussteifenden Schaumstruktur 514 gefüllt sind. Erfindungsgemäß ist das Einsetzen eines eine Raumform aufweisenden, insbesondere strangartigen Schaumvorprodukts in die Hohlkammer 58, welches vor, während oder nach dem Verschweißen in die Hohlkammer 58 eingelegt wird und nach einer Aktivierung zu der Schaumstruktur 514 aufschäumt. Die Aktivierung kann beispielsweise durch Wärmezufuhr beim Lackieren der Lehnenstruktur 51 erfolgen. Hierzu werden vorzugsweise steif vernetzende Schaumsysteme, z. B. auf Epoxidbasis, verwendet. Die Lehnenstruktur 51 wird hierdurch in unfallbedingt hochbelasteten Bereich 530 erheblich versteift.

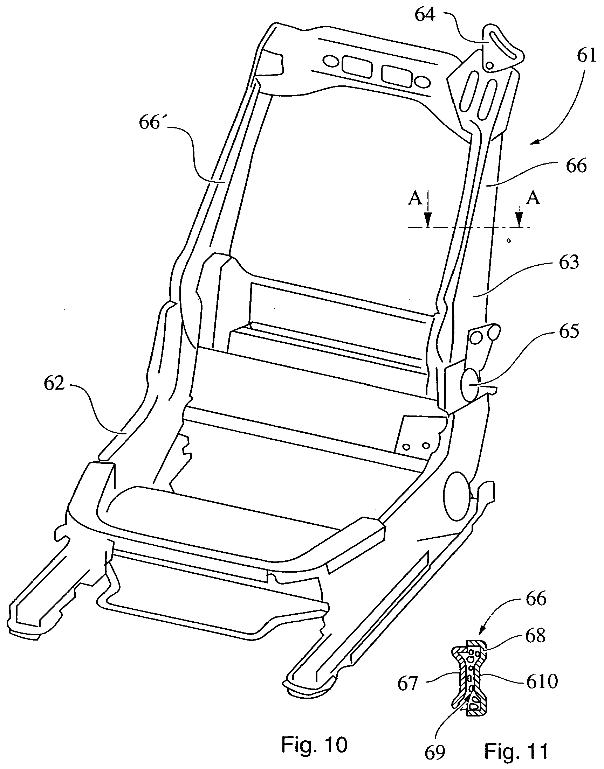

Figur 10 zeigt die perspektivische Ansicht eines nicht erfindungsgemäßen Fahrzeugsitzes gemäß einer weiteren Ausführungsform. In Figur 11 ist ein Schnitt A-A des Fahrzeugsitzes nach Figur 10 dargestellt. Der in Figur 10 gezeigte Fahrzeugsitz 61 weist ein Sitzteil 62 und eine Rücken-lehne 63 auf und ist als Gurtintegralsitz ausgebildet, bei welchem ein Gurtumlenkpunkt 64 oder die Gurtrolleinrichtung an der Oberkante der Rückenlehne 63 befestigt ist. Die Rückenlehne 63 muss daher über die Lehnenneigungsversteller 65 und das Sitzteil 62 die Gurtkräfte in den Fahrzeugboden ableiten. Die Seitenholme 66, 66' der Rückenlehne 63 sind als U- oder Hohlkammerprofile ausgebildet. Im Ausführungsbeispiel bestehen die Seitenholme 66, 66', wie aus Figur 11 ersichtlich, aus zwei U-förmig gepressten Blechteilen 67, 68, die zur Bildung einer Hohlkammer 69 an ihren Schenkel-enden miteinander verschweißt sind. Zumindest der dem Gurtumlenkpunkt zugeordnete Seitenholm 66 ist im Inneren der Hohlkammer 67 über wesentliche Bereiche seiner Längserstreckung mit einer Schaumstruktur 610 versehen, welche die Biege- und/oder Torsionssteifigkeit des Seitenholms 66 erhöht. Die Blechteile 67, 68 können daher mit einer relativ geringen Blechdicke ausgeführt werden. Das Einbringen der Schaumstruktur 610 kann durch Einlegen eines der Hohlkammer 69 entsprechend geformten Schaumfertigteils vor oder während des Verschweißens der Blechteile 67, 68 erfolgen. Alternativ wird die Schaumstruktur 610 erst im Anschluss an das Verschweißen durch Injizieren einer schäumfähigen Masse in die Hohlkammer 69 eingebracht. Besonders bevorzugt ist jedoch das Einsetzen eines eine Raumform aufweisenden, insbesondere strangartigen oder flächigen Schaumvorprodukts in die Hohlkammer 69, welches vor, während oder nach dem Verschweißen in die Hohlkammer 69 eingelegt wird und nach einer Aktivierung zu der Schaumstruktur 610 aufschäumt. Beim Ausschäumen eines U-förmigen Profils wird die Schäumrichtung der schäumfähigen Masse oder des Schaumvorprodukts durch geeignete Dichtmittel und/oder die Form des Schaumvorprodukts vorgegeben. Die Aktivierung kann beispielsweise durch Wärmezufuhr beim Lackieren der Lehnenstruktur 61 erfolgen. Hierzu werden vorzugsweise steif vernetzende Schaumsysteme, z. B. auf Epoxidbasis, verwendet.

### Bezugszeichenliste

- 2: Sitzteil
- 3: Rückenlehne
- 4: Strukturelement
- 5: Hohlraum
- 6: Füllung
- 7: Schaumträger
- 8: Schaummaterial
- 11: Lehnenstruktur
- 12, 12': Lehnensegment
- 13, 13': Basisplatte
- 14, 14': Pressteil
- 15, 15': Seitenlager
- 16: Mittellager
- 17, 17': Drehfallenschloss
- 18, 18': Hohlkammer
- 19: Seitenholm
- 110: Querholm (oben)
- 111: Querholm (unten)
- 112: Schaumstruktur
- 21: Rücksitzbank
- 22, 22': Lehnensegment
- 23: Rückenlehne
- 24, 24': Konsole
- 25, 25': Strukturkomponente
- 26: Schaumstruktur
- 27, 27': Längsholme
- 28: Mittellager
- 29: Querholm
- 31: Lehnenstruktur
- 32, 32': Lehnensegment
- 33, 33': Basisplatte
- 34, 34': Rohrstruktur
- 35, 35': Seitenlager
- 36: Mittellager
- 37, 37': Drehfallenschloss
- 38, 38': Hohlkammer
- 39: Seitenholm
- 310: Querholm (oben)
- 311: Querholm (unten)
- 312: Schaumstruktur
- 41: Lehnenstruktur
- 42, 42': Lehnensegment
- 43, 43': Basisplatte
- 44, 44': Pressteil
- 45, 45': Seitenlager
- 46: Mittellager
- 47, 47': Drehfallenschloss
- 48, 48': Hohlkammer
- 49: Querholm (oben)
- 410: Gurtrollvorrichtung
- 411: Vertikalholm
- 412: Schaumstruktur
- 51: Lehnenstruktur
- 52, 52': Lehnensegment
- 53, 53': Basisplatte
- 54, 54': Pressteil
- 55, 55': Seitenlager
- 56: Mittellager
- 57, 57': Drehfallenschloss
- 58, 58': Hohlkammer
- 59: Durchladeäffnung
- 510: Querholm (oben)
- 511: Querholm (unten)
- 512: Vertikalholm (mittellagerseitig)
- 513: Vertikalholm (zentral)
- 514: Schaumstruktur
- 61: Fahrzeugsitz
- 62: Sitzteil
- 63: Rückenlehne
- 64: Gurtumlenkpunkt
- 65: Lehnenneigungsversteller
- 66, 66': Seitenholm
- 67: Blechteil
- 68: Blechteil
- 69: Hohlkammer
- 610: Schaumstruktur

## Patentansprüche

1. Fahrzeugsitz mit einer Rückenlehne (3) und einem Sitzteil (2), wobei die Rückenlehne (3) ein Lehnensegment (12) mit einer Basisplatte (13, 53) und einem darauf aufgesetzten, ein umlaufendes U-förmiges Profil bildenden Pressteil (14) aufweist, wobei das Lehnensegment (12) einen außenliegenden Seitenholm (19, 512) aufweist, an welchen sich ein oberer Querholm (110, 510) und ein unterer Querholm (111, 511) anschließt, so dass durch die Basisplatte (13) und das Pressteil (14) ein rahmenartig ausgebildeter Hohlraum (18, 18') gebildet wird, wobei in wenigstens einem Teil des Hohlraums eine zur Beeinflussung der Stabilität und/oder des Verformungsverhaltens der Rückenlehne (3) eingebrachte Füllung (6, 514) vorgesehen ist, wobei die Füllung (6, 514) einen Schaumträger (7) und ein Schaummaterial (8) aufweist, wobei das Schaummaterial (8) den Schaumträger (7) zumindest teilweise umgibt, wobei der Hohlraum (18, 18') in seinem einem Fahrzeugseitenbereich zugewandten Bereich das Schaummaterial (8) aufweist, wobei das Schaummaterial (8) im Wesentlichen C-förmig entlang des Hohlraums (18, 18') verläuft, wobei der außenliegende Seitenholm (19) und die sich daran anschließenden Bereiche des oberen Querholms (110) und des unterer Querholms (111) mit dem Schaummaterial (8) gefüllt sind.

2. Fahrzeugsitz nach Anspruch 1, **dadurch gekennzeichnet, dass** das Schaummaterial (8) den Schaumträger (7) vollständig umgibt.

3. Fahrzeugsitz nach einem der vorhergehenden Ansprüche, **dadurch gekennzeichnet, dass** das Schaummaterial (8) zur Expansion in einem Elektro-Tauchlackierungsofen vorgesehen ist.

4. Fahrzeugsitz nach einem der vorhergehenden Ansprüche, **dadurch gekennzeichnet, dass** das Lehnensegment mittels des Schaummaterials (8) im Bereich um eine Durchladeöffnung (59) der Rückenlehne (3) verstärkt ist.

## Claims

1. Vehicle seat comprising a backrest (3) and a seat part (2), the backrest (3) having a backrest segment (12) comprising a base plate (13, 53) and a pressed part (14) which is placed thereon and which forms a peripheral U-shaped profile, the backrest segment (12) having an outer lateral spar (19, 512) to which an upper transverse spar (110, 510) and a lower transverse spar (111, 511) are attached, in such a way that the base plate (13) and the pressed part (14) form a cavity (18, 18') formed in the manner of a frame, a filling (6, 514), which is introduced to influence the stability and/or deformation properties of the backrest (3), being provided in at least part of the cavity, the filling (6, 514) having a foam support (7) and a foam material (8), the foam material (8) enclosing the foam support (7) at least in part, the cavity (18, 18') having the foam material (8) in the region thereof facing a vehicle side region, the foam material (8) extending substantially in a C shape along the cavity (18, 18'), the outer lateral spar (19) and the regions connected thereto of the upper transverse spar (110) and lower transverse spar (111) being filled with the foam material (8).

2. Vehicle seat according to claim 1, **characterised in that** the foam material (8) completely encloses the foam support (7).

3. Vehicle seat according to either of the preceding claims, **characterised in that** the foam material (8) is provided in an electro-dip coating oven for expansion.

4. Vehicle seat according to any of the preceding claims, **characterised in that** the backrest segment is reinforced by the foam material (8) in the region around a loading opening (59) of the backrest (3) .

## Revendications

1. Siège de véhicule comportant un dossier (3) et une partie d'assise (2), le dossier (3) présentant un segment d'appui (12) avec une plaque de base (13, 53) et une pièce fabriquée à la presse (14) qui forme un profil en forme de U périphérique et est apposée dessus, le segment d'appui (12) présentant une barre latérale (19, 512) située à l'extérieur, sur laquelle se raccordent une barre transversale supérieure (110, 510) et une barre transversale inférieure (111, 511) de telle sorte que la plaque de base (13) et la pièce fabriquée à la presse (14) forment une cavité (18, 18') configurée sous la forme d'un cadre, dans lequel il est prévu, dans au moins une partie de la cavité, un remplissage (6, 514) pour influencer la stabilité et/ou le comportement à la déformation du dossier (3), le remplissage (6, 514) présentant un support de mousse (7) et un matériau en mousse (8), le matériau en mousse (8) entourant au moins partiellement le support de mousse (7), dans lequel la cavité (18, 18') présente le matériau en mousse (8) dans sa zone orientée vers une zone latérale du véhicule, le matériau en mousse (8) s'étendant sensiblement en forme de C le long de la cavité (18, 18'), la barre latérale (19) située à l'extérieur et les zones de la barre transversale supérieure (110) et de la barre transversale inférieure (111) qui sont raccordées à celle-ci étant remplies du matériau en mousse (8).

2. Siège de véhicule selon la revendication 1, **caractérisé en ce que** le matériau en mousse (8) entoure complètement le support de mousse (7).

3. Siège de véhicule selon une des revendications précédentes, **caractérisé en ce que** le matériau en mousse (8) est prévu pour l' allongement dans un four électrique de revêtement par immersion.

4. Siège de véhicule selon une des revendications précédentes, **caractérisé en ce que** le segment d'appui est renforcé à l' aide du matériau en mousse (8) dans la zone autour d'une ouverture (59) du dossier (3) prévue pour le chargement.
